# EUROPEAN PATENT APPLICATION

(11) **EP 1 429 513 A1**
(43) Date of publication of application: **16.06.2004**
(21) Application number: 02080223.7
(22) Date of filing: 09.12.2002
(51) Int. Cl.: H04L 29/06

(54) **Method and apparatus for searching data in a peer to peer network**

(71) Applicant: Koninklijke Philips Electronics N.V., 5621 BA Eindhoven (NL)
(72) Inventor: The designation of the inventor has not yet been filed
(74) Representative: Groenendaal, Antonius Wilhelmus Maria

(57) **Abstract**

The invention provides a method and apparatus for more efficient searching peer to peer networks for data. Large peer to peer networks comprise millions of peer clients, or just briefly peers, having enormous amounts of data objects available. Searching all peers takes a lot of time, therefore a small group - private network - is formed within the peer to peer network. Peers for this private network are selected when they satisfy at least on criterion. This criterion relates to for example subscriptions of the peer to data delivery services or to the search query. The private network or networks may be formed upon start-up of the apparatus according to the invention or even right after submitting a search query.

## Description

The invention relates to a method of searching data in a peer to peer network connecting peers, wherein peers are enabled to store data objects received from a data source. The invention further relates to a computer being programmed to perform a method of searching data in a peer to peer network connecting peers, wherein peers are enabled to store data objects received from a data source.

The invention also relates to an apparatus for searching data in a peer to peer network connecting peers, comprising a receiver unit for receiving data objects from a data source, a storage device to store the data objects.

Next, the invention relates to a computer programme product for programming a computer enabling the computer to perform a method of searching data in a peer to peer network connecting peers, wherein peers are enabled to store data objects received from a data source.

Peer to peer networks are popular networks for sharing data. One of the most popular peer to peer services currently known is KaZaa of Sharman Networks. This service allows to share data objects like audio-visual content through a peer to peer network comprising over a million of users. The big advantage of such a large network is that via this service, a lot of different content is widely available for transfer from one peer client (or peer) to another.

A problem is, however, that as the size of the network grows, the search speed goes down, since more and more peers have to be searched for data.

It is an object of the invention to reduce search effort for a search for data objects in a peer to peer network.

This object is achieved by the method according tot the invention, the method comprising the steps of: submitting a search query from the first peer; forming a private network with at least one further peer connected to the peer to peer network, the further peer satisfying at least one criterion; searching for data objects stored by peers connected by the private network, the data matching the search query; and returning the result of the search executed in the previous step to the first peer.

By limiting the group of peers with which is searched for content, the search effort in the peer to peer network can be reduced significantly. For the results, this will not make a big difference, since for most search requests only a few peers have to be searched for requested data. This is either because only a very specific and identifiable group of peers has the requested data available or because the requested data is widely available and a search among a random selection of peers will provide the data searched for.

In an embodiment of the method according to the invention, peers are enabled to subscribe to at least one data delivery service and to store data objects received from the data delivery service; and the criterion is subscription to at least one data delivery service to which the first peer is subscribed as well.

Data delivery services, especially providers of audio-visual data, are not very happy with unlimited dissemination of the content they provide. Therefore, preferably only peers having at least one subscription the same as the peer that submitted a search query, are searched for data matching the search query.

In a further embodiment of the method according to the invention, the criterion is derived from the search query and the private network is formed after submission of the search query.

By forming a private network with a criterion derived from the search query, a network can be formed, in which the odds of finding content matching the search query are higher.

In another embodiment of the method according to the invention, the result of the search only comprises data objects that match the query and that have been received from at least one content delivery service the first peer is subscribed to.

In this way, only search results relating to content the searching peer could have stored itself - and therefore, has paid for, but has not done so because of e.g. lack of time - are returned.

A further aspect of the invention provides a computer being programmed to perform the method according to claim 1

Yet a further aspect of the invention provides an apparatus for searching data in a peer to peer network connecting peers, comprising a receiver unit for receiving data objects from a data source, a storage device to store the data objects and a central processing unit being programmed to: form a private network with at least one further peer connected by the peer to peer network, the further peer satisfying at least one criterion; submit a search query to the private network; receive results from the further peer, the results matching the query.

Another aspect of the invention provides a computer programme product for programming a computer enabling the computer to perform the method according to claim 1.

Further details of the invention will be elucidated in the following description of preferred and other embodiments of the invention and by means of the Figures, wherein:
Figure 1 shows an embodiment of the apparatus according to the invention;
Figure 2 shows a peer to peer network to elucidate an embodiment of the method according to the invention;
Figure 3 shows another peer to peer network to elucidate another embodiment of the method according to the invention; and

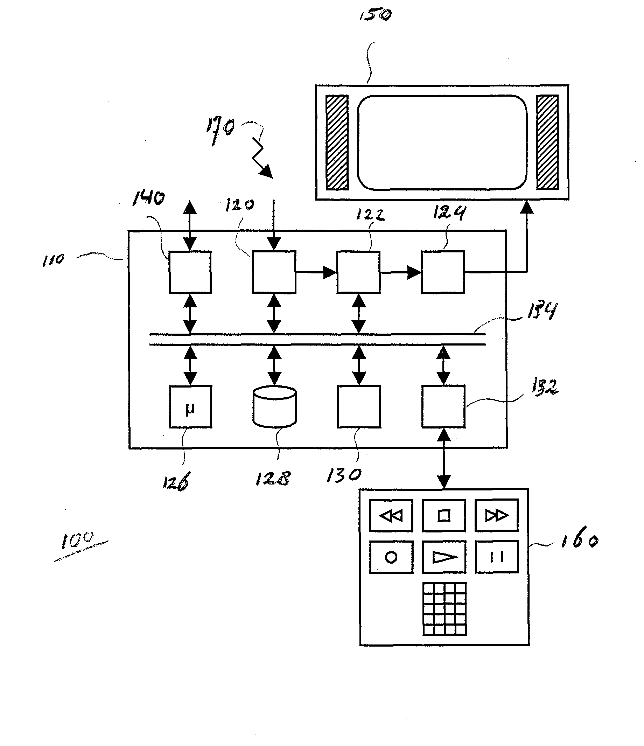

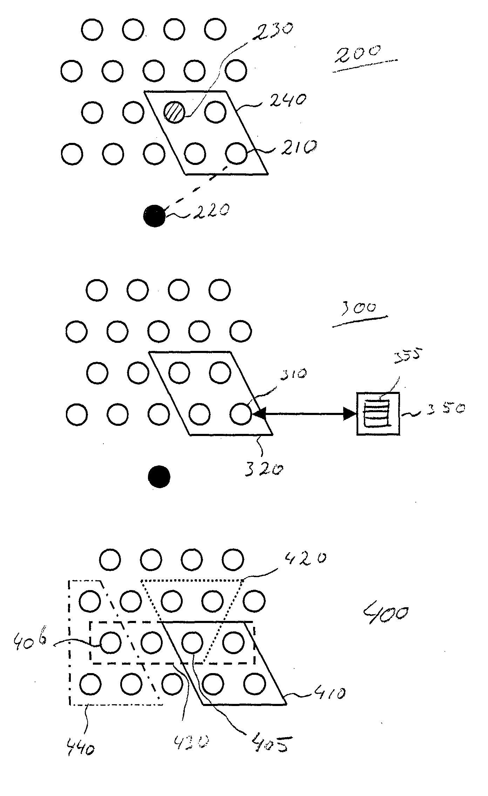

Figure 2 shows a further peer to peer network to elucidate a further embodiment of the method according to the invention.

Figure 1 shows a consumer electronics system 100 comprising a video recorder 110 as an embodiment of the apparatus according to the invention, a TV-set 150 and a control device 160. The video recorder 110 is arranged to record streams of audio-visual data and interactive applications associated with those streams of audio-visual data carried by a signal 170.

To this, the video recorder 110 comprises a receiver 120 for receiving the signal 170, a de-multiplexer 122, a video processor 124, a central processing unit like a micro-processor 126 for controlling components comprised by the video recorder 110, a storage device 128, a programme code memory 130, a user command receiver 132 and a central bus 134 for connecting components comprised by the video recorder 110.

The video recorder further comprises a network interface unit 140 for connecting to a network like the internet. The network interface unit 140 may be embodied as an analogue modem, an ISDN, DSL or cable modem or a UTP/ethernet network interface.

The receiver 120 is arranged to tune in to a television channel and derive data of that television channel from the signal 170. The signal 170 can be received by any known method; cable, terrestrial; satellite, broadband network connection or any other method of distributing audio-visual data. The signal 170 can even be derived from the output of another consumer electronics apparatus.

Data stored in the programme code memory 130 enables the micro processor 126 to execute the method according to the invention. The programme code memory 130 may be embodied as a Flash EEPROM, a ROM, an optical disk or any other type of data carrying medium.

The storage device is adapted to store content that is received by either the receiver 120 or the network interface unit 140 for future reproduction on the TV-set 150 or for further dissemination via the network interface unit 140. The content may be processed prior to storage.

The further dissemination of stored content is preferably done via a peer to peer network 200. The peer to peer network 200 comprises various peers or peer clients, which are all enabled to store data objects like content received from a broadcast provider. A peer 210 gets in contact with other peers by sending a message to a rendez-vous peer 220 at start-up. The rendez-vous peer 220 provides information on other peers of the peer to peer network, so the peer 210 can connect to the peer to peer network 200.

Peers communicate with each other by either sending messages to each other or to a super peer 230 - preferably over the internet -, in the latter case constituting a subnetwork in the peer to peer network. Communication within the network is possible from every peer to every peer. Connections between each of the individual peers have not been drawn for reason of clarity.

Popular peer to peer networks like KaZaa and Gnutella are being used to share data. The data can be searched for. The problem with this kind of networks, however is that they can be very large, which hampers search speed.

On the other hand, for most search requests only a few peers have to be searched for requested data. This is either because only a very specific and identifiable group of peers has the requested data available or because the requested data is widely available and a search among a random selection of peers will provide the data searched for.

Therefore, it would be advantageous to pick from the very large peer to peer network 200 a selection which satisfies the needs of a user of the peer to peer network 200. To this, a private network 240 is formed within the peer to peer network 200. According to the invention, the private network 240 is formed by peers satisfying at least one criterion.

According to an embodiment of the invention as shown by Figure 3, the criterion is derived from the search query. For example, a user of the peer 310 in a peer to peer network 300 enters a search query related to a spy film. Next, the private network 320 is formed of users offering spy films for downloading through the peer to peer network 300. Since probably not all peers of the peer to peer network 300 will offer spy films for downloading, the search effort is downscaled significantly.

In an embodiment of the invention, the information on which clients have which genres of content is administered by a genre server 350. The genre server receives a query from the user of the peer 310 and checks whether the query relates to a genre itself or whether a genre exists to which the query relates. For example, the query 'die another day' relates to the genre of spy films. Next, peers in the peer to peer network 300 are searched whether they offer spy films for download. This may either be done upon receiving a search query or by administrating a genre table 355 in the genre server 350. The genre table 355 comprises information on which peers offer which genres. When the private network 320 is formed, a full search is done within the private network 320.

According to a further embodiment of the invention, each of the peers of the peer to peer network 300 have tables comprising information on which genres are available with each peer.

When the query only comprises a genre, this embodiment of the method according to the invention can speed up the search process. Instead of search each peer for available spy films, only one server has to be queried. And even when tables at all peers have to be checked, this may be done even faster than searching all content offered by a peer by just searching the genre table. Information on the genre of content is preferably obtained by analysing meta-data associated with content. Preferably, this meta-data is received with the content.

In yet a further embodiment of the invention, content is received from a data delivery service to which a user has to subscribe or is subscribed automatically. Providers of such services prefer to restrict dissemination of data they deliver. Even when they allow dissemination of data, they will probably only allow dissemination among users subscribed to their service.

According to this embodiment of the invention, the criterion for selecting peers for private networks for searching data is the data delivery service the peers are subscribed to. For example, when a peer (or more explicitly, a user of a peer) is subscribed to CNN, BBC and the Dutch public broadcast service, the search query is only submitted to peers being subscribed to at least one of those three content delivery services. To this, a private network is formed of three groups of peers, as shown in Figure 4.

Figure 4 shows a peer to peer network 400 with a first group 410 of peers subscribed to CNN, a second group 420 of peers subscribed to BBC and a third group 430 of peers subscribed to the Dutch public broadcast service. A first peer 405 is a member of all three groups. When the first peer 405 submits a search query, only the private network comprising the eight peers comprised by the three groups are searched for data objects matching the search query.

In yet a further embodiment of the invention, only results relating to data objects received from data delivery services of which the first peer is a member are returned. A second peer 406 is a member of a fourth group 440 of peers subscribed to Canal+. When the first peer submits a query for spy films and the second peer has the film 'XXX' available, since this data object has been received from Canal+ and stored, this will not be seen in the results returned to the first peer.

Content may be identified using meta-data. Meta-data is associated with the data objects. For television programmes, content description formats like TV Anytime or MPEG-7 may be used.

TV anytime meta-data provides a Content Reference Identifier, GRID, which comprises information on the origin of the data object. Furthermore, it points to a document providing further information on the data object. A CRID has the following format: crid://DNS-entry/path/filename. The data delivery service may already be identified through the GRID; for example a CRID like crid://bbc.co.uk/films/TheHill identifies the data delivery service as the BBC.

For genre information, the document to which the CRID (or another URL in the the meta-data associated with the data object) points may be analysed. Various variations of the embodiments presented can be made, without departing from the scope of the invention.

One of the variations is that within private networks, further subgroups may be formed. For example, a private network 'films' may be set up, comprising subgroups 'spy films', 'thriller' and 'drama'. Also, a peer may be member of multiple private networks, as shown in Figure 4.

Furthermore, various other types of data can be searched for using the method according to the invention. Besides films, also other types of audio-visual data can be searched for. Even data objects like e-books can be searched for using the method according to the invention and embodiments thereof.

The invention provides a method and apparatus for more efficient searching peer to peer networks for data. Large peer to peer networks comprise millions of peer clients, or just briefly peers, having enormous amounts of data objects available. Searching all peers takes a lot of time, therefore a small group - private network - is formed within the peer to peer network. Peers for this private network are selected when they satisfy at least on criterion. This criterion relates to for example subscriptions of the peer to data delivery services or to the search query. The private network or networks may be formed upon start-up of the apparatus according to the invention or even right after submitting a search query.

## Claims

1. Method of searching data in a peer to peer network connecting peers, wherein peers are enabled to store data objects received from a data source, the method comprising the steps of:
(a) Submitting a search query from the first peer;
(b) Forming a private network with at least one further peer connected to the peer to peer network, the further peer satisfying at least one criterion determined by the first peer;
(c) Searching for data objects stored by peers connected by the private network, the data matching the search query; and
(d) Returning the result of the search executed in the previous step to the first peer.

2. Method according to claim 1, wherein
(a) peers are enabled to subscribe to at least one data delivery service and to store data objects received from the data delivery service; and
(b) the criterion is subscription to at least one data delivery service to which the first peer is subscribed as well.

3. Method according to claim 1, wherein the criterion is derived from the search query and the private network is formed after submission of the search query.

4. Method according to claim 2, wherein the data delivery service is a broadcast service provider and the data objects are streams of audio-visual data.

5. Method according to claim 1, wherein the data objects have meta-data associated with them and the step of searching for data objects comprises analysis of the meta-data.

6. Method according to claim 5, wherein the meta-data comprises a content reference identifier.

7. Method according to claim 6, wherein the content reference identifier points to a further document and the method comprises the step of searching the further document for the search query.

8. Method according to claim 2, wherein the result of the search only comprises data objects that match the query and that have been received from at least one content delivery service the first peer is subscribed to.

9. Method according to claim 8, wherein the data objects have meta-data associated with them and information on the content delivery service that has delivered a data object can be derived from the meta-data associated with the data object.

10. Method according to claim 1, wherein the data objects comprise meta-data and the step of searching for data comprises the step of analysing the meta-data.

11. Method according to claim 1, wherein the data source is at least one of the following:
(a) Peers of the peer to peer network;
(b) A Cable broadcast provider;
(c) A terrestrial broadcast provider;
(d) A satellite broadcast provider

12. Computer being programmed to perform the method according to claim 1.

13. Apparatus for searching data in a peer to peer network connecting peers, comprising a receiver unit for receiving data objects from a data source, a storage device to store the data objects and a central processing unit being programmed to:
(a) Form a private network with at least one further peer connected by the peer to peer network, the further peer satisfying at least one criterion determined by the apparatus;
(b) Submit a search query to the private network;
(c) Receive results from the further peer, the results matching the query.

14. Computer programme product for programming a computer enabling the computer to perform the method according to claim 1.
